# EUROPEAN PATENT APPLICATION

(11) **EP 2 363 340 A1**
(43) Date of publication of application: **07.09.2011**
(21) Application number: 10154552.3
(22) Date of filing: 24.02.2010
(51) Int. Cl.: B63C 7/04

(54) **Method and installation for making a cut in a shipwreck**

(71) Applicant: Smit Nederland B.V., 3087 BM Rotterdam (NL)
(72) Inventor: Haak, Theodorus Menno, 3143 BC Maassluis (NL); Verver, Geert Jan Jacob, 2611 NL Delft (NL); van der Velden, Dirk Robert, 3162 WH H Rhoon (NL)
(74) Representative: Ketelaars, Maarten F.J.M.

(57) **Abstract**

A method for making a cut in a shipwreck lying on a bed of a water, such as the seabed, comprises the steps of:
-providing a vessel having a floating body (3) and spud poles (4,5) which are displaceable in upward and downward direction with respect to the floating body (3),
-positioning the floating body (3) near the shipwreck (2),
-lowering the spud poles (4,5) onto regions of the bed (16) which extend along opposite sides of the shipwreck (2), in such a way that each of said regions is in contact with at least a respective spud pole (4,5),
-applying a flexible cutting member (6) between said spud poles (4,5) which are in contact with said opposite regions,
-applying said flexible cutting member (6) around part of the shipwreck (2),
-forming a cut (11) in the shipwreck (2) while moving the cutting member (6) back and forth between said spud poles (4,5).

## Description

The invention is related to the field of removing a shipwreck or the like from a water bed, e.g. a seabed or a riverbed. In this connection, it has already been proposed to cut the shipwreck into pieces and to subsequently lift these pieces from the seabed. Reference is made to European patent application 1412121 which discloses a saw and a sawing installation by means of which such cuts can be made. The saw in question consists of a cable which is provided with a series of bushes containing external cutting means. By moving such cable back and forth along a part of the shipwreck, a cut can be made therein. Other kinds of saw for making a cut in a shipwreck are known as well, such as a chain.

The opposite ends of the cable are connected to actuators, such as to cranes which are positioned on barges lying on opposite sides of the shipwreck. By operating the cranes in the proper way, the cable can be moved according to said back and forth movement. After a part of the shipwreck has been cut loose, said part is lifted onto for instance another barge in view of transportation to the shore.

A further proposal for making a cut in a shipwreck is disclosed in the international patent application 2009/084953. According to this proposal, a portal is provided. This portal is placed in a straddling position over the shipwreck, whereby both columns of the portal are supported on the seabed next to the shipwreck. The portal carries a saw by means of which parts of the shipwreck can be cut loose. Through dedicated barges, the portal can be lifted from the seabed for subsequent displacement to another part of the shipwreck.

In the prior art methods, rather complicated preparations are necessary before the cutting member can be applied to the appropriate part of the shipwreck. According to the first proposal, two separate ships or barges should be positioned and moored near the shipwreck. According to the second proposal, a rather massive portal, which should be at least as wide as the width of the ship, has to be supported on the seabed in a stable way. In case the seabed is of an uneven or sloping character, care should be taken to level the portal appropriately. Such procedures all have the disadvantage that they are rather time-consuming and cumbersome.

The object of the invention is to provide a method for making a cut in a shipwreck in such a way that the flexible cutting member can be more readily applied at the desired locations which are to be cut.

This object is achieved by means of a method for making a cut in a shipwreck lying on a bed of a water, such as the seabed, comprising the steps of:
- providing a vessel having a floating body and spud poles which are displaceable in upward and downward direction with respect to the floating body,
- positioning the floating body near the shipwreck,
- lowering the spud poles onto regions of the bed which extend along opposite sides of the shipwreck, in such a way that each of said regions is in contact with at least a respective spud pole,
- applying a flexible cutting member, such as a sawing wire or chain, between said spud poles which are in contact with said opposite regions,
- applying said flexible cutting member around part of the shipwreck,
- forming a cut in the shipwreck while moving the cutting member back and forth between said spud poles.

In the method according to the invention, use is made of a floating body, such as a ship or barge, which is provided with at least two spud poles. Spud poles themselves are well-known; they are displaceable between a lifted position and a lowered position in which the lower end of the spud pole is positioned onto the water bed under the influence of gravity. The spud poles may be provided with several kinds of actuating mechanisms for obtaining these displacements. As these actuating mechanisms are known per se as well, they will not be described further.

The spud poles can be moved freely in a vertical direction and are able to rotate slightly around a horizontal axis. The force with which the spud poles are positioned onto the water bed is therefore the force caused by the weight of the spud poles, i.e. gravity. The ship or barge in question remains afloat in the water, which means that the spud poles do not support the weight of the ship or barge. This constitutes an advantage with respect to jack up barges which are to be lifted with respect to the legs thereof. As mentioned, this forms a time consuming process, which has to be repeated every time the jack up barge has to be displaced for making a further cut. After the platform of the jack up barge has been fully lifted, it is above the water level which means that the barge is fully supported by the lack thereof and is no longer subjected to a floating force.

In contrast, the floating capacity of the floating body can be maintained throughout the cutting operation. The spud poles are simply lowered onto the water but, which takes little time. As a result, the repeated displacements of the vessel for making successive cuts requires a relatively little time. A mooring system, e.g. a multitude of mooring cables, will hold the floating body at the desired position relative to the shipwreck. Alternatively, the floating body may be equipped with a dynamic positioning system for maintaining the desired location with respect to the shipwreck.

After the spud poles are lifted from the water bed and the mooring system released, the floating body can be moved to reach the remainder of the shipwreck. When the floating body has reached the desired position, the spud poles are lowered under the influence of gravity until they reach the water bed. The mooring system is activated to maintain the floating body at its position and the cutting process can subsequently be carried out on the next part of the shipwreck.

According to the invention, the spud poles are used for guiding the flexible cutting member in the proper way with respect to a shipwreck and the like for the purpose of making a cut therein. As the spud poles are firmly stabilized with respect to the water bed due to the fact that they are positioned onto the water bed under the influence of gravity, the flexible cutting member can be tensioned between the spud poles and can be moved back and forth with respect to the shipwreck in the desired manner. The spud poles are able to withstand the forces which occur as a result of the cutting action thus obtained. Furthermore, the flexible cutting member can now be installed in a rather simple way in any desired position. The ship or barge in question is placed in the desired position above or next to the shipwreck, after which the spud poles can be lowered. After the cutting action has been completed, the spud poles are lifted, and the ship or barge is displaced somewhat, preferably by means of its own propulsion installation or by actuating the mooring system, to a next location for making a cut.

The opposite ends of the flexible cutting member can be guided upwardly towards the floating body along the spud poles by guide means, such as guide sheaves. The guide means furthermore may comprise a sleeve which is guided in a vertical direction along the spud poles, and a holder. The guide sleeves are operated by operating means that are situated on the floating body. Thereby, the guide sleeves can be positioned at any desired position along the height of the spud poles. Furthermore, the guide means may comprise a holder which supports the guide sheave with respect to the guide sleeve. Said holder can be swiveled with respect to the guide sleeve according to a vertical axis so as to make it possible to adapt the orientation of the guide sheave in dependence on the shape of the cut which is being made.

The opposite ends of the cutting number can be pulled upwardly in an alternating fashion so as to obtain the back and forth movement thereof along the shipwreck. In this connection, it is important to note that the flexible cutting number can be used for both making a horizontal cut or a vertical cut. Also, it is possible to make cuts which are obliquely oriented.

For the purpose of making a horizontal or oblique cut, the method according to the invention comprises the steps of:
- guiding the flexible cutting member according to a loop which extends transversely with respect to the respective spud poles,
- applying said loop around an upstanding portion of the shipwreck.

In this case, the flexible cutting member can be guided around an angle of about 90 degrees forming generally horizontal flexible cutting member parts which run along opposite sides of the shipwreck. These horizontal flexible cutting member parts merge into an intermediate portion which contacts the upstanding portion of the shipwreck to be cut. The horizontal flexible cutting member parts together with the intermediate cutting member part are slung around the upstanding portion of the shipwreck. The cut thus obtained will have a generally horizontal orientation as well.

According to an alternative embodiment, the method according to the invention may comprise the steps of:
- guiding the flexible cutting member according to a loop which extends parallel to, or is situated in, the plane running through the respective spud poles,
- applying said loop around a lying or horizontally extending part of the shipwreck.

In this case, a more or less vertical cut can be made in the shipwreck. For the purpose of cutting several portions of the ship after each other, the method may comprise the steps of:
- lifting the spud poles from the bed after cutting a section from the shipwreck,
- moving the floating body to a subsequent location,
- lowering the poles at said subsequent location,
- cutting a section from the shipwreck at said subsequent location.

Also, the mooring system will be de-activated before moving the floating body, and will be activated once the subsequent location has been reached. Similarly, in the case of a floating body equipped with a dynamic positioning system, a subsequent location can be reached as well.

The transition from horizontal cut to vertical cut or vice versa can be achieved by repositioning the guide means on the spud poles. When a certain desired position is reached, the guide means are fixed with respect to the spud poles and the cutting is resumed.

When a section is cut off from the ship wreck, the section is removed. According to the invention the method may comprise the steps of:
- coupling the hoisting means to a section to be cut from the shipwreck,
- hoisting said section after this has been cut loose from the shipwreck.

For the purpose of hoisting the sections, a separate barge with cranes may be provided.

The invention is furthermore related to vessel for carrying out the method described before. Said vessel comprises a floating body, spud poles carried by said floating body at a distance from each other, said spud poles being displaceable in vertical direction, a flexible cutting member, such as a cutting wire or chain, guide means provided on the spud poles for guiding the flexible cutting member between said spud poles, as well as an actuator for moving the flexible cutting member back and forth between said spud poles.

The flexible cutting member can for instance be moved back and forth by means of an actuator such as a winch, or for instance two winches at both ends of said member. It is also possible to apply hoisting cranes for actuating the flexible cutting member.

Furthermore, appropriate guide means such as guide sheaves and the like can be applied at appropriate locations along the length of the spud poles. To that end, the guide means are connected to operating means such as a cable connected to a winch on board the vessel. Thereby, the guide means may be located at any position along the length of the spud poles in such a way that the flexible cutting member extends downwardly from the floating body along the spud poles as well as between both spud poles.

In particular, the guide means may comprise guide sheaves which are rotatable according to a respective axis transverse with respect to the corresponding spud pole. With the aim of providing the possibility to sling the flexible cutting member according to a more or less horizontal loop around the shipwreck, these guiding means comprise a holder with respect to which holder the guide sheave is rotatable according to said axis transverse with respect to the corresponding spud pole, and which holder is rotatable with respect to the corresponding spud pole according to an axis which is parallel to said spud pole. By means of such holder, the rotatable guide sheaves may adjust their orientation according to the shape of the loop oriented in the horizontal direction.

As mentioned before, the floating body may be carried out in many different ways, for instance as a barge. According to another embodiment, the floating body is a self-propelled ship. The advantage of such a ship is that it may be relocated at different positions along the shipwreck without the help of additional tugs and the like. According to a further preferred embodiment, the spud poles may be accommodated near the bow and stem of the ship.

Advantageous embodiments are further defined by the dependent claims. Below, the invention will be explained with reference to some drawings, which are intended for illustration purposes only and not to limit the scope of protection as defined in the accompanying claims.
Fig. 1 shows a side view of the installation according to the invention in a first stage of salvaging a shipwreck.
Fig. 2 shows a detail of the installation of Fig. 1.
Fig. 3 shows a front view of the installation of Fig. 1.
Fig. 4 shows a section of the ship being hoisted after completion of the cutting operation.
Fig. 5 shows the spud poles being lifted and the floating body being moved to the remainder of the shipwreck to be salvaged.
Fig. 6 shows a special preferred embodiment of the spud poles.

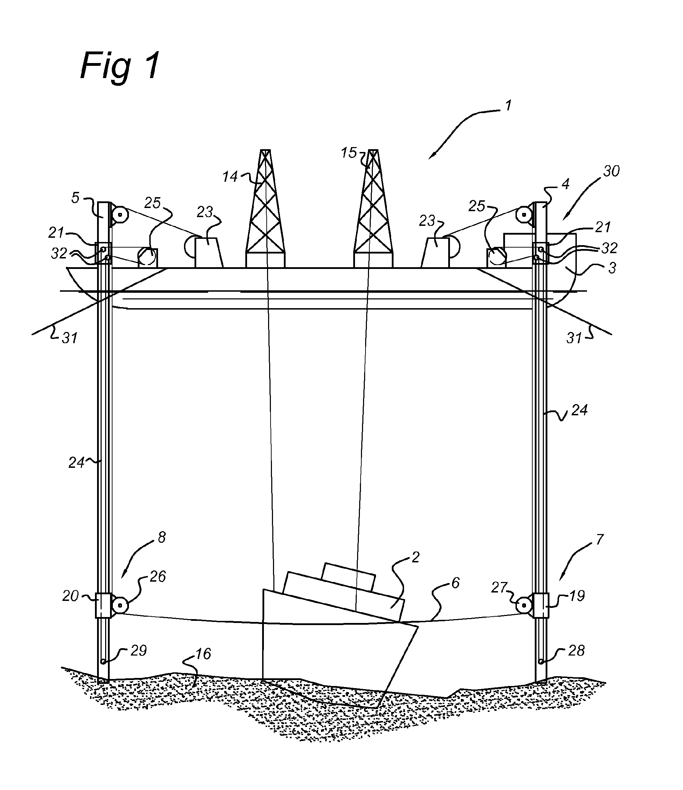

Figure 1 shows a side view of the vessel 1 according to the invention in a first stage of salvaging a shipwreck 2. The vessel 1 is provided with a floating body 3 which carries spud poles 4, 5. Through the support- and operating means 21, which are for instance provided with a tooth rack/tooth wheel device, these spud poles 4, 5 are displaceable between a position in which they are lifted with respect to the floating body 3, and a lowered position. In said lifted position, the spud poles 4, 5 do not or do hardly protrude with respect to the lower contour of the floating body 3. Thereby, the installation is easily displaceable between various locations. After the vessel has reached the desired location above the shipwreck, the spud poles 4, 5 are lowered onto the water bed under the influence of gravity. Through the mooring system 30, the vessel is subsequently stabilized against lateral movements. Said mooring system 30 comprises a multitude of mooring cables 31, which are fastened to the seabed 16 in a known way, e.g. by anchors (not shown).

The force with which the spud poles are positioned onto the water bed is equal to the force caused by the weight of the spud poles. In the situation of Fig. 1, the floating body 3 has been maneuvered in such a way that the spud poles 4, 5 are positioned at both sides of the shipwreck 2. Extending downwardly along and in between the spud poles 4, 5 is a flexible cutting member 6, such as a sawing wire or chain. At both ends, the cutting member 6, such as a sawing wire or chain 6, is wound onto the winches 23. Thus, said cutting member 6 can be moved back and forth by operating the winches 23 in opposite rotational directions. The spud poles 4, 5 are provided with guide means 7, 8 for guiding the sawing wire or chain 6 according to a particular loop as will be discussed below. The position along the spud poles 4, 5 of guide means 7, 8 can be adjusted by the endless cable 24 slung around the winch 25.

The guide means 7, 8 can each be independently moved up and down along the corresponding spud pole 4, 5 by means of their own endless cable 24 and winch 25. The endless cable 24 is guided according to two parts parallel to the spud pole, one part being connected to said guide means 7, 8. The endless cable 24 is guided around a winch 25 as well as around the sheaves 32 on the floating body 3. Furthermore, the endless cable is guided around the reversal sheaves 29 at the lower end of the spud poles 4, 5. The winch 25 can be operated in such a way that the guide means 7, 8 can be lowered or hoisted by the endless cable 24.

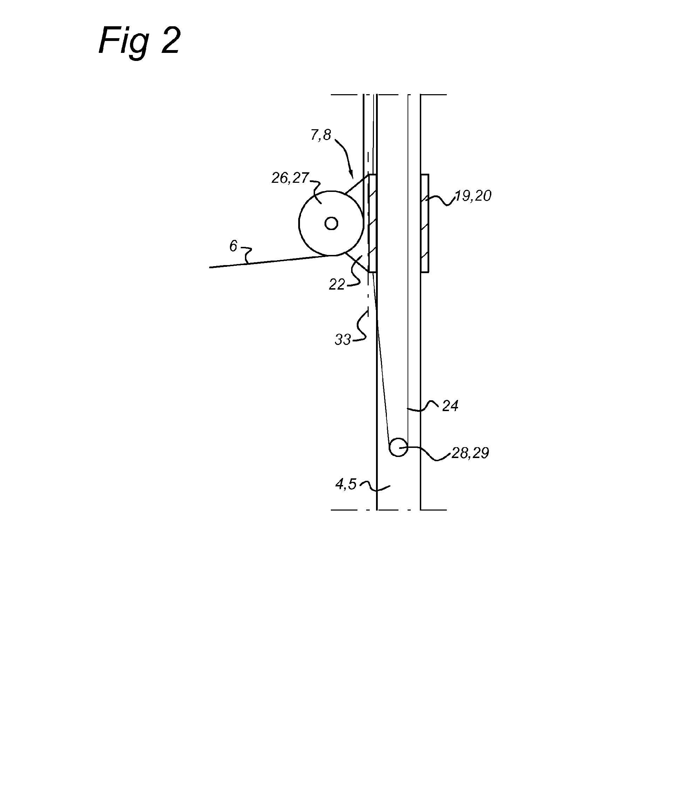

Figure 2 shows a detail of the guide means 7, 8. These comprise a guide sleeve 19, 20; a holder 22 and a guide sheave 26, 27. The guide sheave 26, 27 is suspended from the guide sleeve 19, 20 by a pivot 23 with an axis parallel to the spud poles. In this way the guide sheave 26, 27 can rotate with respect to the guide sleeve 26, 27 to guide the flexible cutting wire 6 when making a horizontal cut 9 in the ship wreck 2.

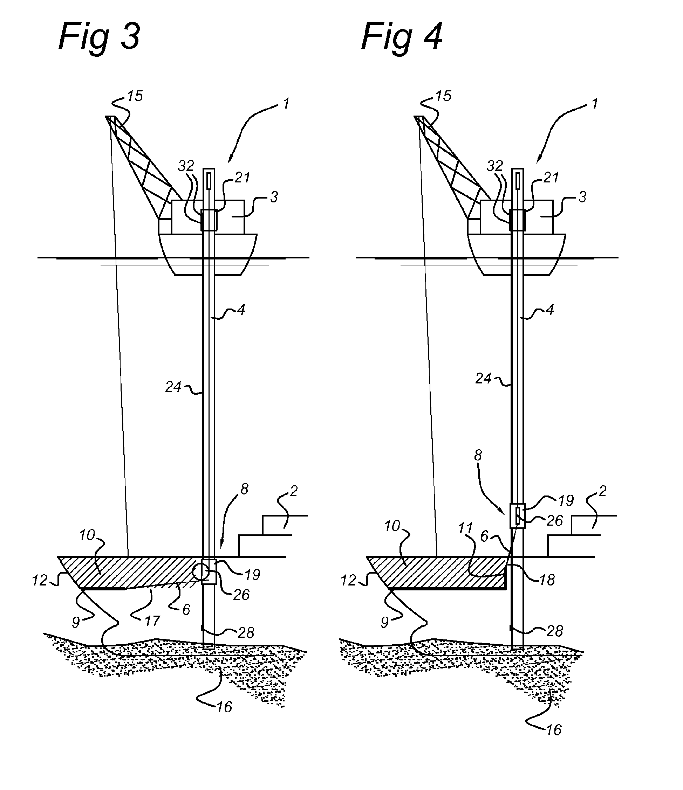

Figure 3 shows a front view of the installation 1 of Figure 1. In this embodiment the floating body 3 is positioned transversely in relation to the shipwreck, whereby the spud poles 4, 5 that are positioned at both sides of the shipwreck 2. In addition, Fig. 3 shows that already a first part of a horizontal cut 9 has been made in the shipwreck. In order to be able to cut off sections 10 of the shipwreck the sawing wire or chain 6 must be guided in the vertical and horizontal direction. For the purpose of making said horizontal cut 9 the sawing wire or chain 6 is guided according to a loop 17 that is applied around the stem 12 of the shipwreck 2 in the embodiment shown. This means that said loop 17 extends generally horizontally with respect to the spud poles 4, 5. For a generally vertical cut 11 the sawing wire or chain 6 is guided according to a loop 18 which is generally vertical, for instance situated in the plane running through the spud poles 4, 5, whereby said loop 18 is applied around a lying or horizontally extending part of the shipwreck 2.

By use of the guide means 7, 8 and the guide sleeves 19, 20, it is possible to guide the sawing wire or chain 6 in horizontal direction from the first side 12 to the second side 13 of the section 10 that is to be cut off, after which the sawing wire or chain 6 is guided in a vertical direction to the top of the section 10 to be cut off. The holder 22 allows the guide sheaves 26, 27 to adapt the required position, rotated according to the axis of the pivot 33, in dependence of the progression and the orientation of the cut being made.

Figure 4 shows a section 10 of the shipwreck ready to be hoisted after completion of the cutting operation. After the section 10 is cut off, the hoisting means 14, 15 that are attached to both the shipwreck section 10 and the floating body 3 lifts the shipwreck section 10 from the rest of the shipwreck. Subsequently, it is placed onto a desired surface, e.g. the floating body 3, an additional floating body that can move the shipwreck section 10 to another position, or the water bed 16.

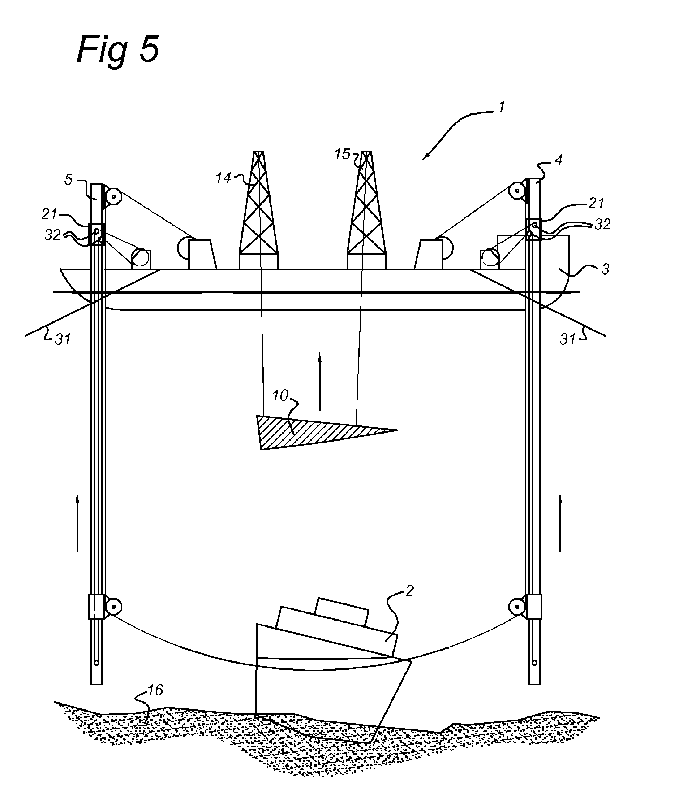

Figure 5 shows the spud poles 4, 5 being lifted and the floating body 3 being moved to the remainder of the shipwreck 2 to be salvaged. The floating body 3 maintains its floating capacity with respect to the water throughout,. As the spud poles 4, 5 are lifted and thus removed from the water bed 16, the floating body 3 is at least able to move in a direction towards the remainder of the shipwreck 2. After reaching this position the spud poles 4, 5 are lowered until they reach the water bed 16 and the process described before is repeated.

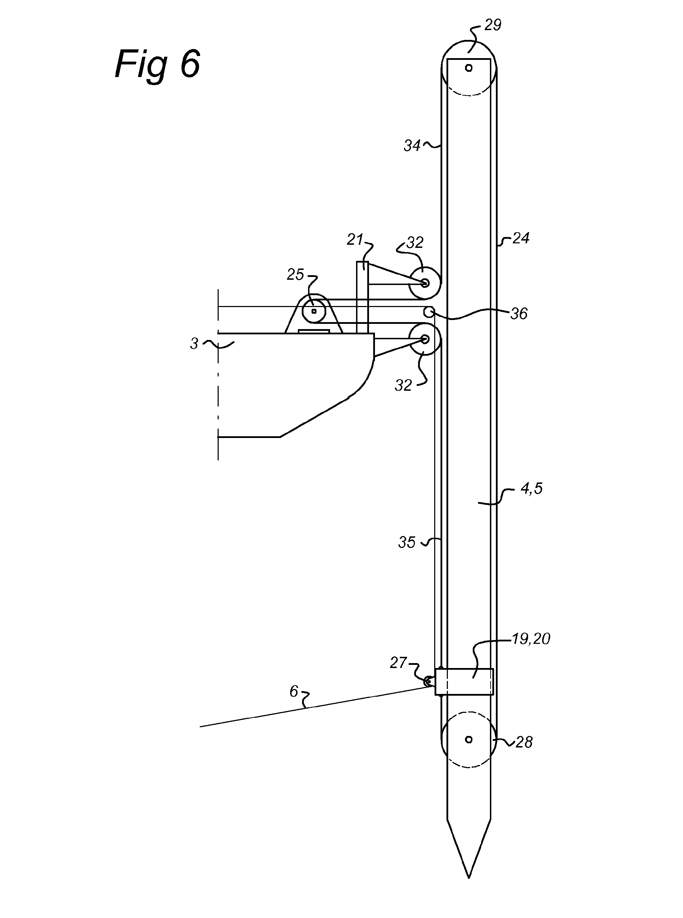

Figure 6 shows a special preferred embodiment of the spud poles. The spud poles are provided with a reversal sheave 28at the bottom end and a reversal sheave 29 at the top end. The sheaves 32 are provided at the floating body, for instance supported with respect to the support- and operating means 21. The cable 24, when coming from the winch 25, is guided in opposite directions along the spud pole 4, 5 by means of the sheaves 32. The downwardly extending part 35 of the cable 24 is connected to the guide sleeve 19, 20. The other, upwardly extending part 34 is guided around the upper reverse sheave 29, guided downwardly to the lower reversal sheave 28, then guided upwardly again and connected to the guide sleeve 29, 20.

In practice, the guide sleeve 19, 20 is positioned at the desired level along the spud pole, and the winch is fixed. As soon as a heave motions occur, the body will move up/down, leading to a corresponding movement of the guide sleeve 19, 20. As the magnitude of this movement is rather limited, the influence thereof under cutting operation is minimal

The cutting wire 6 is guided around the sheave 36 which is supported with respect to the floating body 3, and guided downwardly to the guide sheave 27 on the guide sleeve 19, 20. The influence of the limited heave movements on this cutting wire 6 is minimal as well.

It will be apparent to the person skilled in the art that other embodiments of the invention can be conceived and reduced to practice without departing from the true spirit of the invention, the scope of the invention being limited only by the appended claims as finally granted. The description is not intended to limit the invention.

### List of parts

1. Installation
2. Shipwreck
3. Floating body
4. Spud pole
5. Spud pole
6. Cutting member
7. Guide means
8. Guide means
9. Horizontal cut
10. Shipwreck section
11. Vertical saw cut
12. First side
13. Second side
14. Hoisting means
15. Hoisting means
16. Water bed
17. Horizontal loop
18. Vertical loop
19. Guide sleeve
20. Guide sleeve
21. Support- and operating means of spud pole
22. Holder
23. Winch
24. Cable
25. Winch
26. Guide sheave
27. Guide sheave
28. Reversal sheave cable 24
29. Reversal sheave cable 24
30. Mooring system
31. Mooring cable
32. Sheave cable 24
33. Pivot
34. Upwardly extending part cable 24
35. Downwardly extending part cable 24
36. Guide sheave

## Claims

1. Method for making a cut in a shipwreck (2) lying on a bed of a water, such as the seabed (16), comprising the steps of:
- providing a vessel having a floating body (3) and spud poles (4, 5) which are displaceable in upward and downward direction with respect to the floating body (3),
- positioning the floating body (3) near the shipwreck (2),
- lowering the spud poles (4, 5) onto regions of the bed (16) which extend along opposite sides of the shipwreck (2), in such a way that each of said regions is in contact with at least a respective spud pole (4, 5),
- applying a flexible cutting member (6) between said spud poles (4, 5) which are in contact with said opposite regions,
- applying said flexible cutting member (6) around part of the shipwreck (2),
- forming a cut (11) in the shipwreck (2) while moving the cutting member (6) back and forth between said spud poles (4, 5).

2. Method according to claim 1, comprising the step stabilizing the floating body (3) in lateral directions by means of a mooring system (30), such as a mooring system comprising a multitude of mooring cables (31).

3. Method according to claims 1 or 2, wherein the flexible cutting member (6) is guided upwardly towards the floating body (3) along the spud poles (4, 5), comprising the step of alternately pulling the upwardly extending flexible cutting member parts.

4. Method according to any one of the preceding claims, comprising the steps of:
- guiding the flexible cutting member (6) according to a loop (17) which extends transversely with respect to the respective spud poles (4, 5),
- applying said loop (17) around an upstanding portion of the shipwreck (2).

5. Method according to claims 1-3, comprising the steps of:
- guiding the flexible cutting member (6) according to a loop (18) which extends generally parallel to, or is generally situated in the plane running through, the respective spud poles (4, 5),
- applying said loop (18) around a lying or horizontal part of the shipwreck (2).

6. Method according to any of the preceding claims, whereby the floating body (3) or another vessel is provided with hoisting means (14, 15), comprising the steps of:
- coupling the hoisting means (14, 15) to a section (10) to be cut from the shipwreck (2),
- hoisting said section (10) after this has been cut loose from the shipwreck (2).

7. Method according to any of the preceding claims, comprising the steps of:
- lifting the spud poles (4, 5) from the bed (16) after cutting a section (10) from the shipwreck (2),
- moving the floating body (3) to a subsequent location,
- lowering the spud poles (4, 5) at said subsequent location,
- cutting a section (10) from the shipwreck (2) at said subsequent location.

8. Method according to any of the preceding claims, comprising the step of applying a sawing wire or chain.

9. Vessel for carrying out the method according to any of the preceding claims, comprising a floating body (3), spud poles (4, 5) carried by said floating body (3) at a distance from each other, said spud poles (4, 5) being displaceable in upward and downward direction, a flexible cutting member (6), guide means (7, 8) provided on the spud poles (4, 5) for guiding the flexible cutting member (6) between said spud poles (4, 5), as well as an actuator (23) for moving the flexible cutting member (6) back and forth between said spud poles (4, 5).

10. Vessel according to claim 9, whereby the flexible cutting member (6) is a sawing wire or chain.

11. Vessel according to claim 9 or 10, wherein operating means (25) are provided which are connected to the guide means (7 ,8) for displacing said guide means (7, 8) along the spud poles (4, 5).

12. Vessel according to any of claims 9-11, wherein the guide means (7, 8) comprise guide sheaves (26, 27) which are rotatable according to a respective axis transverse with respect to the corresponding spud pole (4, 5).

13. Vessel according to claim 12, wherein the guide means (7, 8) comprise a holder (22) with respect to which holder the guide sheave (26, 27) is rotatable according to an axis transverse with respect to the corresponding spud pole (4, 5), and which holder (22) is rotatable with respect to the corresponding spud pole (4, 5) according to an axis (33) which is parallel to said spud pole (4, 5).

14. Vessel according to any of claims 9-13, wherein the floating body (3) is a self-propelled ship or towed barge.

15. Vessel according to claim 14, wherein the spud poles (4, 5) are accommodated near the bow and stem of the ship or barge.
